# EUROPÄISCHE PATENTSCHRIFT

(11) **EP 2 043 814 B1**
(45) Veröffentlichungstag und Bekanntmachung des Hinweises auf die Patenterteilung: **21.03.2012**
(21) Anmeldenummer: 07785884.3
(22) Anmeldetag: 03.07.2007
(51) Int. Cl.: B23Q 1/01, B23Q 37/00, B23P 21/00

(54) **MODULARE BEARBEITUNGSVORRICHTUNG**
MODULAR PROCESSING DEVICE
DISPOSITIF D'USINAGE MODULAIRE

(30) Priorität: 04.07.2006 DE 102006032121
(43) Veröffentlichungstag der Anmeldung: 08.04.2009
(73) Patentinhaber: teamtechnik Maschinen und Anlagen GmbH, 71691 Freiberg (DE)
(72) Erfinder: REINISCH, Hubert, 71691 Freiberg/Neckar (DE); WEILER, Thomas, 74379 Ingersheim (DE)
(74) Vertreter: Witte, Weller & Partner
(86) Internationale Anmeldenummer: PCT/EP2007/005879
(87) Internationale Veröffentlichungsnummer: WO 2008/003462

(56) Entgegenhaltungen:
- EP-A1- 0 743 137
- EP-A1- 1 637 280
- EP-A2- 1 316 388
- DE-U1- 9 208 584

## Beschreibung

Die vorliegende Erfindung betrifft eine Bearbeitungsvorrichtung, sogenannte Prozessbank, zur Bearbeitung eines auf einem Werkstückträger transportierten Werkstücks mit einem Basismodul und zumindest einem in das Basismodul an einer Stelle innerhalb eines Aufnahmebereichs einsetzbaren Prozessmodul.

Bearbeitungsvorrichtungen bzw. Bearbeitungsstationen der vorgenannten Art sind allgemein bekannt. So vertreibt die Anmelderin beispielsweise derartige Bearbeitungsvorrichtungen unter dem Namen "TEAMOS". Darüber hinaus ist auch aus der Druckschrift DE 197 41 671 A1 eine solche Bearbeitungsvorrichtung bekannt.

Daneben zeigt auch die Druckschrift EP 1 637 280 A1 eine Bearbeitungsvorrichtung, die sich aus einem Basismodul und Prozessmodulen zusammensetzt.

Allgemein ist eine Bearbeitungsvorrichtung üblicherweise ein modulares Bearbeitungs-, Montage- und/oder Prüfsystem, das zur Bearbeitung, Montage und/oder Prüfung von Produkten, beispielsweise auch Pharma- und medizintechnischen Produkten, dient. Innerhalb des Bearbeitungssystems kommt jeder Bearbeitungsstation zumindest eine bestimmte Funktion zu, die bei dem Produkt durchgeführt werden soll. Beispielsweise kann eine Funktion darin bestehen, zwei Gehäuseteile miteinander zu verbinden, eine Dichtheitsprüfung durchzuführen, einen elektrischen Funktionstest durchzuführen, eine Lötung auszuführen, usw. Eine andere Funktion besteht darin, ein Gehäuseteil per Laser zu beschriften. Bei Pharma- und medizintechnischen Produkten sind beispielsweise Prozesse wie Dosierung von Flüssigkeiten und Substanzen, Dosierung von Medikamenten, Wärmebehandlung der Substanzen, Bestrahlungsprozesse, Verarbeitung von Mono- oder Polymeren, etc. von Bedeutung.

Diese Funktionen werden in den Bearbeitungsstationen automatisch durchgeführt. Daneben umfasst ein Bearbeitungssystem beispielsweise auch manuelle Bearbeitungsstationen, wo die Funktionen manuell ausgeführt werden, sowie reine Transferstationen, die lediglich zum Weitertransport der mit den Produkten bestückten Werkstückträger dienen.

In der oben genannten Druckschrift sind Bearbeitungsstationen gezeigt, die mehrere sogenannte Prozessmodule umfassen. Diese Prozessmodule sind jeweils in sich abgeschlossene autarke Vorrichtungen, die eine bestimmte Funktion ausüben. Da eine Bearbeitungsstation mehrere solcher Prozessmodule aufnehmen kann, ist es somit möglich, in einer Bearbeitungsstation mehrere Funktionen auszuüben.

Zur Aufnahme der Prozessmodule ist ein sogenanntes Basismodul vorgesehen, das Einschubaufnahmen für die einzelnen Prozessmodule besitzt. Üblicherweise haben die Basismodule vier Einschubaufnahmen mit jeweils einer Breite von 400 mm, in die entsprechend breit gerasterte (400 mm, 800 mm, etc.) Prozessmodule einsetzbar sind.

Das Basismodul umfasst neben diesen Einschubaufnahmen einen in das Basismodul fest eingebauten Schaltschrank, der unter anderem die für die Steuerung der Prozessmodule notwendigen zentralen Steuerungseinrichtungen aufnimmt. Grundsätzlich ist im Zusammenhang mit der vorliegenden Anmeldung unter Basismodul eine Vorrichtung zu verstehen, die zumindest ein Gestell zur Unterbringung von autarken Prozessmodulen und von prozessmodulunspezifischen Komponenten, wie bspw. Energieversorgung, Schalteinrichtungen, etc., umfasst.

Soll ein Bearbeitungssystem erweitert werden, wird eine weitere aus einem Basismodul und mehreren Prozessmodulen bestehende Bearbeitungsstation eingefügt.

Grundsätzlich bestehen Bearbeitungssysteme also aus einer oder mehreren Bearbeitungsstationen, die jeweils ein gleich aufgebautes Basismodul sowie an die jeweils auszuführenden Funktionen angepasste Prozessmodule aufweisen.

DE-92085 84 U offenbart eine Bearchitungs vorrichtung nach dem ober begriff des Anspruchs 1, mit einen modularen Einhausung.

Obgleich diese modularen Bearbeitungsstationen vom Markt außerordentlich erfolgreich angenommen wurden, besteht weiterhin der Wunsch, die Flexibilität solcher Bearbeitungsstationen zu erhöhen und die Fertigungskosten zu senken.

Vor diesem Hintergrund besteht die Aufgabe der vorliegenden Erfindung darin, die eingangs genannte Bearbeitungsvorrichtung so weiterzubilden, dass sie eine höhere Flexibilität bei der Einrichtung, Umrüstung, etc. bietet und darüber hinaus kostengünstiger angeboten werden kann.

Diese Aufgabe wird durch eine Bearbeitungsvorrichtung nach Anspruch 1 gelöst.

Das heißt mit anderen Worten, dass die erfindungsgemäße Bearbeitungsvorrichtung nicht - wie bei bisherigen Lösungen - mehrere fest vorgegebene Einschubaufnahmen besitzt, deren Breite jeweils der minimalen "Raster"-Breite eines Prozessmoduls entspricht. Vielmehr bietet die Trägereinrichtung der erfindungsgemäßen Bearbeitungsvorrichtung die Möglichkeit, die Prozessmodule und/oder Funktionsmodule innerhalb des Aufnahmebereichs an beliebiger Stelle oder an einer Vielzahl von vorbestimmten Stellen anzuordnen. Konnte ein Prozessmodul bei der bekannten Bearbeitungsstation mit vier Einschubaufnahmen an vier Stellen innerhalb des Aufnahmebereichs aufgenommen werden, kann das Prozessmodul bei der erfindungsgemäßen Bearbeitungsvorrichtung an einer deutlich größeren Zahl von Stellen aufgenommen werden. Ferner können nunmehr auch Funktionsmodule innerhalb der Aufnahmebereiche frei bzw. nahezu frei positioniert werden, wobei Funktionsmodule in sich abgeschlossene Baugruppen sind, die keine Werkstück-bearbeitenden Funktionen ausführen, wie Transport, Steuereinheit, die einer bestimmten Anzahl von Prozessmodulen zugeordnet ist, Medien- und Energieversorgung, Einhausung, etc.

Bevorzugt ist die Zahl der vorbestimmten Stellen größer als die maximale Anzahl der einsetzbaren Prozessmodule, wobei das Prozessmodul mit der kleinsten Breite hierbei zugrunde gelegt wird.

Insgesamt lässt sich dadurch eine Erhöhung der Flexibilität bei der Ausgestaltung einer Bearbeitungsvorrichtung erzielen. Durch die höhere Flexibilität können Bauteile weiter standardisiert werden, so dass sich die Herstellungskosten insgesamt verringern lassen.

Gegenüber der in der zuvor genannten Druckschrift EP 1 637 280 A1 gezeigten Lösung hat die vorliegende Erfindung deshalb den Vorteil, dass sich einerseits die Prozessmodule deutlich flexibler innerhalb der Bearbeitungsvorrichtung anordnen lassen. Andererseits können auch Funktionsmodule, also bspw. Gehäuseteile, Schaltschränke, etc., deutlich flexibler innerhalb der Bearbeitungsvorrichtung angeordnet werden.

Die Trägereinrichtung ist aus zumindest einem Trägerelement mit einem hinteren Träger und einer unteren Auflagefläche ausgebildet, die sich jeweils über die gesamte Länge des Trägerelements erstrecken. Bevorzugt stellt die Trägereinrichtung einen Aufnahmebereich bereit, der sich über die gesamte Länge der Trägereinrichtung erstreckt.

Diese Maßnahmen haben den Vorteil, dass ein maximaler Bereich zur Aufnahme von Prozessmodulen zur Verfügung steht. Darüber hinaus ist es dadurch möglich, Trägerelemente miteinander zu koppeln, wodurch sich ein noch größerer ununterbrochener Aufnahmebereich ergibt.

Teile zum Aufbau einer Einhausung sind als in den Aufnahmebereich einsetzbare Funktionsmodule ausgebildet. Bevorzugt sind auch der Bearbeitungsvorrichtung zugeordnete zentrale Steuereinrichtungen oder Schaltschränke als in den Aufnahmebereich einsetzbare Funktionsmodule ausgebildet. Weiter bevorzugt sind auch Teile der zum Transport der Werkstückträger vorgesehenen Fördereinrichtung als in den Aufnahmebereich einsetzbare Funktionsmodule ausgebildet.

Mit anderen Worten sind nahezu alle Baugruppen einer Bearbeitungsvorrichtung modular aufgebaut, unabhängig davon, ob sie allgemeine Funktionen oder Werkstück-Bearbeitungs-Funktionen ausführen, und lassen sich folglich sehr flexibel in den Aufnahmebereich der Trägereinrichtung einsetzen. So ist beispielsweise die zentrale Steuereinrichtung, die bei bisherigen Bearbeitungsstationen, wie bspw. der oben genannten EP 1 637 280 A1, fester Bestandteil des Basismoduls war, als selbständige modulare Einheit vorgesehen, die sich innerhalb des Aufnahmebereichs an beliebiger bzw. nahezu beliebiger Stelle einsetzen lässt. Dieser Aufbau hat letztlich zur Konsequenz, dass Bearbeitungsstationen im klassischen Sinne, die durch ein Gestell mit fest angebrachter zentraler Steuereinrichtung und einer bestimmten Anzahl von Einschubaufnahmen für Prozessmodule gekennzeichnet sind, nicht mehr existieren. Damit kann die Flexibilität bei der Planung und beim Aufbau einer Bearbeitungsanlage weiter erhöht werden.

Bei einer bevorzugten Weiterbildung setzt sich die Trägereinrichtung aus zumindest zwei Trägerelementen zusammen.

Das heißt mit anderen Worten, dass die Trägereinrichtung nicht eine einteilige Einrichtung darstellt, sondern beispielsweise auch aus mehreren Trägerelementen aufgebaut sein kann. Die Trägerelemente haben analogen Aufbau und können in ihrer Länge variieren. Die Flexibilität lässt sich dadurch weiter erhöhen sowie die Möglichkeit der späteren Erweiterung verbessern.

Der Träger weist eine Befestigungsschiene auf, die sich bei einer bevorzugten Weiterbildung über die gesamte Länge des Aufnahmebereichs erstreckt und die mit einem an einer Prozessplatte des Prozessmoduls angebrachten Halteelement haltend und indexierend zusammenwirkt. Bevorzugt weist die Befestigungsschiene ein Lochraster zur Aufnahme von Indexier- und Befestigungsbolzen auf.

Das heißt mit anderen Worten, dass der Träger ein Mittel aufweist, das die Anbringung von Bolzen in fest vorgegebenen Abständen zulässt. Auf diese Bolzen lässt sich die Prozessplatte des einzusetzenden Prozessmoduls aufsetzen, wobei die Bolzen dann in entsprechende Bohrbuchsen in der Prozessplatte eingreifen. Dadurch wird die Position des Prozessmoduls indexiert, das heißt fest vorgegeben. Durch diese Bolzen können dann Schrauben in den Träger eingedreht werden, um die Prozessplatte mit dem Trägerelement fest zu verbinden.

Bevorzugt ist das Lochrastermaß so gewählt, dass die minimale Breite eines Prozessmoduls ein Vielfaches (incl. auch Faktor 1) dieses Lochrastermaßes ist. Wird als minimale Prozessmodulbreite beispielsweise 400 mm gewählt, kann ein bevorzugtes Lochrastermaß 100 mm betragen, also beispielsweise ein viertel des Prozessmodul-Rasters. Prozessmodule können folglich an Stellen bzw. Positionen innerhalb des Aufnahmebereichs eingesetzt werden, die jeweils um diesen Abstand von 100 mm getrennt sind.

An dieser Stelle sei jedoch angemerkt, dass auch andere technische Lösungen zur Indexierung und Befestigung von Prozessmodulen auf der Trägereinrichtung denkbar sind. Darüber hinaus ist es auch denkbar, den Träger so auszubilden, dass die Prozessmodule an beliebigen Stellen befestigt werden können. In diesem Fall würde die sogenannte Rasterung entfallen.

Schließlich sei an dieser Stelle noch angemerkt, dass auch die Funktionsmodule wie die Prozessmodule in den Aufnahmebereich der Trägereinrichtung einsetzbar sind. Die Funktionsmodule können folglich ebenfalls an beliebigen bzw. nahezu beliebigen Stellen (bei Verwendung eines Lochrasters) innerhalb des Aufnahmebereichs der Prozessbank eingesetzt werden. Als Funktionsmodule werden dabei alle Module bezeichnet, die keine direkte Bearbeitung am Werkstück durchführen.

Bei einer bevorzugten Weiterbildung weist die Auflagefläche der Trägereinrichtung zumindest eine, sich über die Länge des Aufnahmebereichs erstreckende Lochraster-Schiene auf, wobei das Lochraster jenem der Befestigungsschiene entsprechen kann, jedoch nicht zwingend erforderlich ist. Beispielsweise kann das Lochraster der Befestigungsschiene des oberen Trägers 100 mm, das Lochraster der unteren Auflagefläche 50 mm betragen.

Diese Lochraster-Schiene wird dazu eingesetzt, die Prozessmodule oder die Funktionsmodule an einer weiteren Stelle mit der Prozessbank zu verbinden.

Die der Erfindung zugrunde liegende Aufgabe wird auch von einem Prozessmodul für eine solche erfindungsgemäße Bearbeitungsvorrichtung gelöst, die eine Prozessplatte und ein Schaltschrankgehäuse aufweist und dadurch gekennzeichnet ist, dass an der Prozessplatte zumindest ein Halteelement vorgesehen ist, das an der Befestigungsschiene des Trägers der Prozessbank angepasst ist, um mit dieser haltend und integrierend zusammenzuwirken.

Die Vorteile dieser Maßnahme wurden bereits zuvor erläutert, so dass darauf nicht nochmals eingegangen werden muss.

Weitere Vorteile und Ausgestaltungen der Erfindung ergeben sich aus der Beschreibung und der beiliegenden Zeichnung.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung wird nun anhand von Ausführungsbeispielen mit Bezug auf die Zeichnung näher erläutert, wobei sämtliche Prozessmodule der Übersichtlichkeit wegen ohne den eigentlichen Prozessaufbau gezeichnet sind. Dabei zeigen:
- Figur 1: eine perspektivische Ansicht einer Bearbeitungsvorrichtung gemäß einer ersten Ausführungsform;
- Figur 2: eine perspektivische Darstellung einer teilweise aufgebauten Bearbeitungsvorrichtung;
- Figur 3: eine perspektivische Darstellung der in Figur 2 gezeigten Prozessbank mit weiteren hinzugefügten Bauelementen;
- Figur 4: eine perspektivische Darstellung einer Trägereinrichtung gemäß einer weiteren Ausführungsform;
- Figur 5: eine Ausschnittsdarstellung der in Figur 4 gezeigten Trägereinrichtung;
- Figur 6: eine perspektivische Darstellung der Trägereinrichtung mit einigen eingesetzten Prozessmodulen und einem Funktionsmodul;
- Figur 7: eine perspektivische Darstellung einer fertig aufgebauten Prozessbank im Falle, dass die Prozessbank in Betrachterrichtung fortgeführt wird, und
- Figur 8: eine schematische Blockdarstellung des grundsätzlichen Aufbaus einer Bearbeitungsanlage.

In Figur 8 ist der grundsätzliche Aufbau einer Bearbeitungsanlage schematisch dargestellt. Eine Bearbeitungsanlage besteht im Allgemeinen aus einer oder mehreren Bearbeitungsvorrichtungen, die als Prozessbänke bezeichnet werden.

Eine Bearbeitungsvorrichtung, d.h. Prozessbank setzt sich zusammen aus einem Basismodul und zumindest einem Prozessmodul.

Das Basismodul wiederum ist -im Gegensatz zu den bisherigen Lösungen- ebenfalls modular aufgebaut und umfasst eine Trägereinrichtung mit einem Aufnahmebereich zur Aufnahme von Prozessmodulen und sogenannten Funktionsmodulen. Sowohl Prozessmodule als auch Funktionsmodule sind an beliebiger bzw. nahezu beliebiger Stelle in den Aufnahmebereich der Trägereinrichtung einsetzbar. Einsetzbar bedeutet einerseits, dass der erforderliche Raum für das Modul vorhanden ist, und andererseits, dass eine Befestigung des Moduls an der Trägereinrichtung möglich ist. "Einsetzen" ist im Sinne der Erfindung folglich das Einbringen eines Moduls an die gewünschte Position und das Befestigen bzw. Verbinden des Moduls an bzw. mit der Trägereinrichtung.

Als Funktionsmodule werden all jene Vorrichtungen bezeichnet, die keine direkte Bearbeitung am Werkstück vornehmen, also bspw. eine Transportvorrichtung, eine in einem Schaltschrank untergebrachte Steuereinrichtung, oder Einhausungsteile, um nur einige Beispiele zu nennen. Grundsätzlich ist als Funktionsmodul jedes in die Trägereinrichtung einsetzbare Modul zu verstehen, das keine Bearbeitung an einem Werkstück vornimmt.

Schließlich ist die Trägereinrichtung aus einem oder mehreren aneinander gekoppelten Trägerelementen gleicher oder unterschiedlicher Länge ausgebildet, wobei die Trägerelemente den durchgehenden Aufnahmebereich bilden, so dass Prozess- oder Funktionsmodule auch über ein Trägerelement hinweg einsetzbar sind, d.h. von zwei benachbarten Trägerelementen getragen werden.

Ausgehend von diesem abstrakten Aufbau einer Bearbeitungsanlage werden nachfolgend beispielhaft Ausführungsformen einer Prozessbank dargestellt und erläutert. Es ist jedoch anzumerken, dass es sich hierbei um Ausführungsformen handelt, die stellvertretend für weitere nicht gezeigte denkbare Ausführungsformen stehen und die Erfindung nicht darauf beschränken sollen.

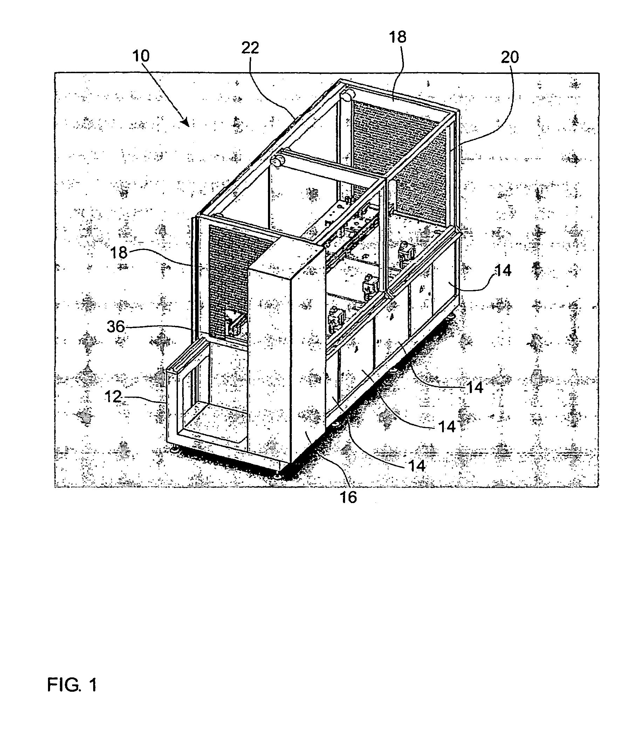

Eine detaillierte Beschreibung einer Prozessbank mit Funktionsmodulen sowie der Trägereinrichtung erfolgt nun mit Bezug auf die Figuren 1 bis 7.

In Figur 1 ist eine Prozessbank perspektivisch dargestellt und mit dem Bezugszeichen 10 gekennzeichnet. Die Prozessbank 10 kann Teil einer größeren Bearbeitungsanlage sein, die aus einer Vielzahl solcher oder ähnlicher Prozessbänke 10 aufgebaut ist. Die gezeigte Prozessbank 10 kann jedoch auch einzeln betrieben werden, z.B. mit einem manuell getakteten Werkstückträger oder in Kombination mit einem Transportsystem.

Grundsätzlich dient die Prozessbank 10 dazu, ein auf einem Werkstückträger transportiertes Werkstück beim Durchlaufen der Prozessbank zu bearbeiten, zu montieren und/oder zu prüfen/testen. Die Bearbeitung kann beispielsweise darin bestehen, ein Handygehäuse mit den elektronischen Baugruppen zu bestücken, das Gehäuse per Laser zu beschriften oder Ähnlichem. Die Anmelderin bietet mittlerweile für das bereits erwähnte Bearbeitungssystem "TEAMOS" eine Vielzahl von unterschiedlichen Bearbeitungsprozessen an.

Die einzelnen Bearbeitungsprozesse innerhalb der Prozessbank 10 werden von so genannten Prozessmodulen ausgeführt, die in Figur 1 mit dem Bezugszeichen 14 gekennzeichnet sind. Für unterschiedliche Bearbeitungsprozesse können in der Prozessbank 10 unterschiedliche daran angepasste Prozessmodule 14 vorgesehen werden. In der gezeigten Prozessbank sind beispielhaft insgesamt vier Prozessmodule vorgesehen.

Die Prozessmodule 14 sind in ein Trägergestell eingesetzt, das in Figur 1 mit dem Bezugszeichen 12 gekennzeichnet ist und nachfolgend als Trägereinrichtung bezeichnet wird. Der Aufbau dieser Trägereinrichtung 12 wird später noch genauer erläutert werden.

Die Prozessbank 10 weist neben den Prozessmodulen 14 einen Schaltschrank 16 auf, der die zur zentralen Steuerung und Versorgung der Prozessmodule erforderlichen Baugruppen aufnimmt. Hierzu gehören insbesondere elektronische Steuerungsgruppen.

Schließlich weist die Prozessbank 10 ein aus zwei Seitenwänden 18, einer Rückwand 22 und einer Tür 20 bestehendes Gehäuse auf, das einen Prozessraum umschließt, in dem die einzelnen Bearbeitungsschritte an dem durch diesen Prozessraum hindurch laufenden Werkstück ausgeführt werden. Schematisch ist in Figur 1 noch eine Fördereinrichtung 36 gezeigt, die für den Transport der mit jeweils zumindest einem Werkstück bestückten Werkstückträger sorgt.

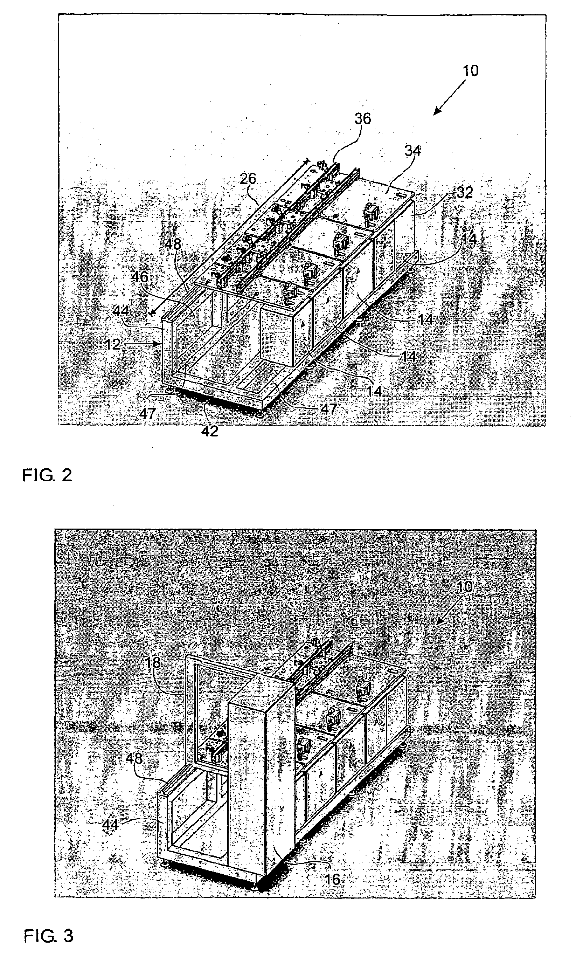

Der Aufbau einer solchen Prozessbank 10 gestaltet sich sehr einfach und soll nachfolgend mit Bezug auf die Figuren 2 und 3 erläutert werden.

In Figur 2 ist eine Prozessbank 10 in einem teilweise aufgebauten Zustand gezeigt. Insbesondere fehlen die Gehäuseteile, wie Seitenwände 18, Rückwand 22 oder Tür 20 sowie der Schaltschrank 16.

Deutlich zu erkennen ist die Trägereinrichtung 12, die aus einem Rückwandelement 44 und einem Bodenelement 42 aufgebaut ist. Das Rückwandelement 44 steht senkrecht zum Boden 42, so dass sich im Querschnitt eine L-Form ergibt.

Sowohl der Boden 42 als auch das Rückwandelement 44 sind aus einzelnen Längs-und Querträgern aufgebaut, wobei parallel verlaufende Längsträger 47 über quer verlaufende Querträger 45 miteinander verbunden sind. Die entstehenden Zwischenräume zwischen Längs- und Querträgern können frei bleiben oder durch Platten, etc. geschlossen werden.

Das Rückwandelement 44 weist als oberen Abschluss einen Längsträger 46 auf, der sich über die gesamte Länge der Trägereinrichtung 12 erstreckt. Auf diesem oberen Längsträger 46 ist eine Befestigungsschiene 48 aufgebracht, die im Querschnitt beispielsweise T-förmig sein kann und dazu ausgebildet ist, mit entsprechend komplementär ausgebildeten Elementen an den Prozessmodulen 14 haltend und indexierend zusammenzuwirken.

In Figur 2 ist deutlich zu erkennen, dass sich diese Befestigungsschiene 48 über die gesamte Länge des oberen Längsträgers 46 und folglich über die gesamte Länge der Trägereinrichtung 12 erstreckt.

Die Länge dieser Befestigungsschiene 48 definiert einen Aufnahmebereich, der in Figur 2 mit dem Bezugszeichen 26 gekennzeichnet ist. Innerhalb dieses Aufnahmebereichs 26 ist es möglich, Prozessmodule 14 in die Trägereinrichtung 12 einzusetzen.

Dies erfolgt dadurch, dass das Prozessmodul 14, das im Wesentlichen aus einer Prozessplatte 34 und einem Schaltschrank 32 besteht, von vorne eingeschoben und anschließend abgesetzt wird.

Dabei kommt ein an der Unterseite an der Prozessplatte 34 angebrachtes Halteelement mit der Befestigungsschiene 48 in Kontakt, um so die Position des Prozessmoduls 14 in Querrichtung festzulegen. Im vorderen Bereich der Prozessmodule 14 ist ein senkrechter Träger vorgesehen, der sich von der Unterseite der Prozessplatte 34 nach unten erstreckt und auf einem der Längsträger 47 des Bodens 42 aufliegt und damit die Prozessplatte in einem vorderen Bereich abstützt. Diese Träger sind in Figur 2 durch die jeweiligen Schaltschränke 32 der Prozessmodule 14 verdeckt.

Bei dieser Art der Befestigungsschiene 48 ist es möglich, ein einzelnes Prozessmodul 14 an einer beliebigen Längsposition innerhalb des Aufnahmebereichs 26 einzusetzen. Feste Positionen für die einzelnen Prozessmodule gibt es nicht. Theoretisch wäre es zudem denkbar, dass ein Prozessmodul sogar im Übergang von einer Trägereinrichtung 12 zu einer folgenden Trägereinrichtung eingesetzt wird.

An dieser Stelle sei angemerkt, dass der eigentliche prozesstechnische Aufbau auf der Prozessplatte aus Übersichtsgründen in sämtlichen Figuren der vorliegenden Erfindung ausgeblendet ist, d.h. nicht dargestellt ist.

In Figur 3 ist die in Figur 2 gezeigte Prozessbank 10 dargestellt und mit weiteren Elementen versehen. Bei diesen Elementen handelt es sich um eine Seitenwand 18 sowie den Schaltschrank 16. Es ist aus dieser Figur deutlich zu erkennen, dass die Seitenwand 18 ebenfalls ein Halteelement aufweist, das komplementär zu der Befestigungsschiene 48 ausgebildet ist und damit am Rückwandelement 44 befestigt werden kann. Wie bereits im Zusammenhang mit den Prozessmodulen 14 angegeben, kann die Seitenwand 18 an einer beliebigen Stelle innerhalb des Aufnahmebereichs 26 angebracht werden. Die vordere Abstützung der Seitenwand 18 erfolgt über einen senkrechten Träger, der auf einem Längsträger 47 des Bodens 42 aufliegt. Dieser senkrechte Träger ist durch den Schaltschrank 16 in der Figur 3 verdeckt.

Der Schaltschrank 16 lässt sich ebenfalls an einer beliebigen Stelle innerhalb des Aufnahmebereichs 26 der Trägereinrichtung 12 anordnen, wobei er auf Längsträgern 47 des Bodens 42 aufliegt.

Beide Figuren 2 und 3 lassen noch Teile einer Fördereinrichtung erkennen, die mit dem Bezugszeichen 36 gekennzeichnet ist und sich über alle, im vorliegenden Fall vier, Prozessmodule 14 erstreckt. Teile der Fördereinrichtung 36 werden auf die Prozessplatten der einzelnen Prozessmodule aufgesetzt, wobei diese Fördereinrichtung 36 ebenfalls modular aufgebaut ist und als selbstständige Einheit handhabbar ist. Ebenso ist es denkbar, dass jedes Prozessmodul über eine eigene Fördereinrichtung verfügt. Aus Übersichtlichkeitsgründen ist in den Figuren jedoch kein Antrieb für Riemen der Fördereinrichtung 36 gezeigt. Der Antrieb könnte jedoch zusammen mit der entsprechenden Steuerung in einem Funktionsmodul untergebracht sein, das sich wie ein Prozessmodul 14 in die Prozessbank 10 einsetzen lässt.

Die in Figur 1 gezeigten weiteren Elemente, wie Seitenwand 18 (zusammen mit Tür 20 und Rückwand 22), lassen sich ebenfalls als einzelne Elemente in die Trägereinrichtung 12 einsetzen.

Aus den Figuren 1 bis 3 ergibt sich, dass der Aufbau einer Prozessbank 10 sehr einfach erfolgen kann, da alle Elemente modular in die Prozessbank einsetzbar sind. Nicht nur die modular aufgebauten Prozessmodule 14, sondern auch alle übrigen Teile, insbesondere auch Schaltschränke, Gehäuseteile etc. lassen sich als sogenannte Funktionsmodule in die Trägereinrichtung 12 einsetzen.

Insgesamt wird auf fest vorgegebene Basismodule zur Aufnahme von Prozessmodulen verzichtet. Es gibt folglich nicht mehr eine klassische Bearbeitungsstation, die aus einem Basismodul fester Länge mit fest angebrachtem Schaltschrank und Gehäuseteilen besteht. Losgelöst von der starren Struktur von üblichen Bearbeitungsstationen können nunmehr Prozessbänke aus beliebigen Prozess- und Funktionsmodulen aufgebaut werden, wobei deren Platzierung in Längsrichtung frei bzw. im wesentlichen frei wählbar ist.

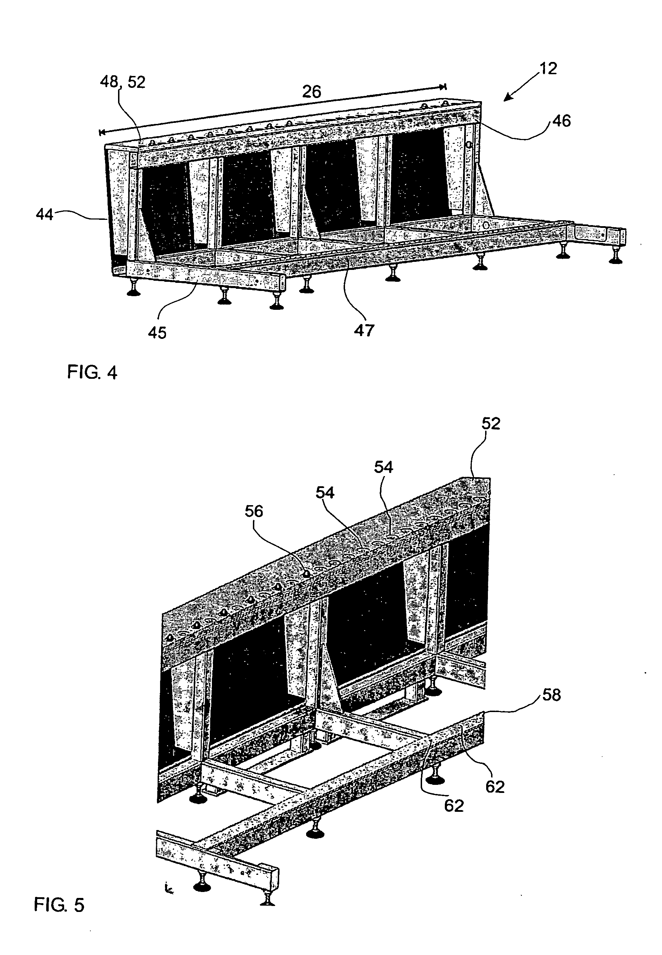

In den Figuren 4 bis 7 ist ebenfalls eine Prozessbank 10 in unterschiedlichen Aufbauzuständen gezeigt. Die Prozessbank 10 unterscheidet sich nur unwesentlich von der in den Figuren 1 bis 3 gezeigten Prozessbank, so dass auf eine Beschreibung der mit gleichen Bezugszeichen gekennzeichneten Teile verzichtet werden kann.

Auch hier ist die Trägereinrichtung 12 aus Längs- und Querträgern aufgebaut, so dass sich ein L-förmiger Querschnitt ergibt.

Auf dem oberen Längsträger 46 der Trägereinrichtung 12 ist eine Befestigungsschiene 48 aufgebracht, die im vorliegenden Ausführungsbeispiel als Lochraster-Platte 52 ausgelegt ist. Das heißt, dass in der Lochraster-Platte 52 eine Vielzahl von gleichmäßig beabstandeten Löchern 54 eingebracht sind, die in Längsrichtung, das heißt parallel zu dem oberen Längsträger 46, verlaufen. In Figur 5 sind diese Löcher 54 deutlich zu erkennen. Der Abstand benachbarter Löcher 54, das heißt mit anderen Worten das Rastermaß des Lochrasters, wird abhängig von dem Rastermaß der Prozessmodule ausgewählt. Es wird vorzugsweise so gewählt, dass das Prozessmodul-Raster ein Vielfaches des Lochrasters ist. Als Prozessmodul-Raster (das heißt kleinste nominelle (= physikalische Baubreite plus Rangierspaltmaß links und rechts, z.B. von 10 mm, pro Prozessmodul zum leichten Einbringen oder Herauslösen eines Prozessmoduls aus einer vollbestückten Prozessbank) Breite eines Prozessmoduls) hat sich bei früheren Bearbeitungsanlagen ein Wert von 400 mm als vorteilhaft herausgestellt. Bei einem solchen Prozessmodul-Raster läge ein vorteilhafter Wert für das Lochraster-Maß bei 100 mm Abstand zwischen benachbarten Löchern 54. Selbstverständlich sind andere Lochraster-Maße ebenfalls denkbar, solange sie zumindest kleiner sind oder ein ganzzahliger Teiler des Prozessmodul-Rasters sind.

Mit Hilfe der vorliegenden Erfindung ist es selbstverständlich auch möglich, feinere Prozessmodul-Raster, z.B. 100 mm, anzuwenden und dadurch Prozessbänke, Bearbeitungsanlagen und Prozessmodule/Funktionsmodule noch bedarfsgerechter zu gestalten.

Aus den Figuren 4 und 5 wird ersichtlich, dass in die Löcher 54 Bolzen 56 eingefügt werden können, die neben der Indexierung auch Befestigungsfunktion haben.

Wie bereits im Zusammenhang mit der Prozessbank 10 der Figuren 1 bis 3 erläutert, dient die Befestigungsschiene 48 zur Indexierung und Befestigung der eingesetzten Prozessmodule und Funktionsmodule. Aufgrund der Verwendung eines Lochrasters und darin eingesetzten Indexierbolzen 56, können die Prozessmodule 14 und Funktionsmodule bei dieser Ausführungsform nicht mehr an beliebiger Stelle innerhalb des Aufnahmebereichs 26 der Trägereinrichtung 12 eingesetzt werden, sondern nur an durch das Lochraster-Maß vorgegebenen Positionen. Da jedoch innerhalb einer Prozessmodul-Breite eine Vielzahl von Löchern 54 vorgesehen sind, lässt sich ein Prozessmodul oder ein Funktionsmodul an sehr vielen Positionen einsetzen. Eine Beschränkung auf beispielsweise vier mögliche Positionen innerhalb einer Bearbeitungsstation, wie dies bei der in der Beschreibungseinleitung erwähnten TEAMOS-Anlage der Fall ist, besteht mithin nicht mehr.

Die Prozessmodule 14 weisen an der Unterseite der Prozessplatte 32 ein zu den Indexierbolzen 56 komplementäres Element auf, besitzen also eine Öffnung in Form einer Bohrbuchse, in die der Indexierbolzen eingreift. Zur endgültigen Befestigung des Prozessmoduls auf der Trägereinrichtung 12 werden noch Schrauben durch diese Bohrbuchsen eingesteckt und mit der Lochraster-Platte 52 verschraubt.

Die Funktionsmodule haben identische bzw. ähnliche Mittel, um sie an der Trägereinrichtung befestigen zu können.

Um jedes Prozessmodul 14 auch im vorderen Bereich zu fixieren, ist auf einem der Längsträger 47 des Bodens 42 eine Lochraster-Platte 58 aufgebracht, die Bohrungen 62, insbesondere Gewindebohrungen, aufweist. Der auf diesem Längsträger aufliegende Träger des Prozessmoduls kann dann ebenfalls über Schrauben befestigt werden.

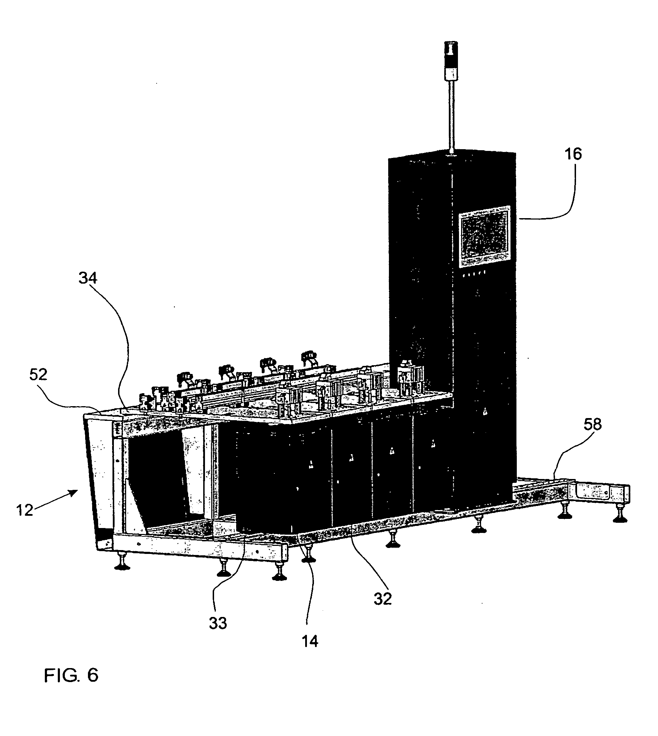

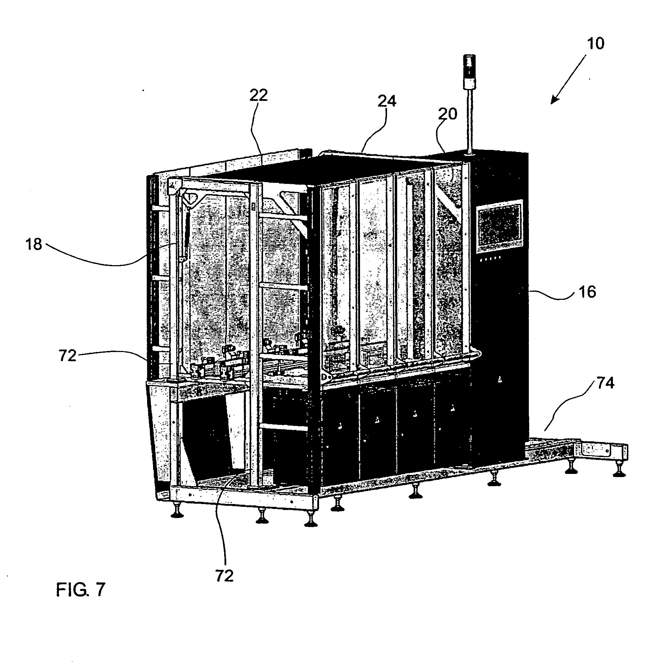

In den Figuren 6 und 7 ist ein Teil einer Prozessbank 10 mit einer solchen Trägereinrichtung 12 aufgebaut. Deutlich zu erkennen sind mehrere Prozessmodule 14, die mit ihrer Prozessplatte 34 auf der Lochraster-Platte 52 aufliegen. Im vorderen Bereich ist zumindest teilweise ein senkrechter Träger 33 zu erkennen, der auf der Lochraster-Platte 58 aufliegt und die Prozessplatte abstützt. An diesem Träger ist dann der Schaltschrank 32 befestigt.

Die Prozessbank 10 weist zudem einen Schaltschrank 16 mit Bedienungspaneel auf, der ein Funktionsmodul bildet und an der Trägereinrichtung 12 innerhalb des Aufnahmebereichs angebracht ist. Dieser Schaltschrank 16 liegt auf Längsträgern 47 des Bodens 42 auf und ist zumindest an der Lochraster-Platte 58 fixiert.

Schließlich können zusammen mit der Seitenwand 18 noch die einzelnen Gehäuseteile, wie Rückwand 22, Türen 20 oder Decke 24 in den Aufnahmebereich der Trägereinrichtung eingebracht werden, wobei die Gehäuseteile ebenfalls ein Funktionsmodul bilden. Die Seitenwand 18 besteht beispielsweise aus Trägern 72, die sich auf der unteren Lochraster-Platte 58 bzw. der oberen Lochraster-Platte 52 abstützen.

In den Figuren 6 und 7 ist noch deutlich zu erkennen, dass die Trägereinrichtung 12 einen freien Platz innerhalb des Aufnahmebereichs 26 besitzt, der in Figur 7 mit dem Bezugszeichen 74 gekennzeichnet ist. Dieser freie Platz könnte zur Aufnahme eines weiteren Prozessmoduls oder Funktionsmoduls verwendet werden. Aufgrund der modularen Bauweise könnte in diesem Fall der Schaltschrank 16 sehr einfach nach rechts versetzt werden, so dass das neue Prozessmodul direkt im Anschluss an ein bestehendes Prozessmodul eingebaut werden kann. Eine solche flexible Lösung war mit den bisherigen Anlagen nicht möglich. Dies lag insbesondere auch daran, dass zentrale Schaltschränke, Gehäuseteile etc. fester Bestandteil des Basismoduls waren und folglich nicht mehr ohne weiteres verändert werden konnten.

Schließlich wäre es beispielsweise auch möglich, die in Figur 7 gezeigte unvollständig dargestellte Prozessbank 10 um eine weitere Trägereinrichtung 12 zu erweitern, ohne jedoch einen weiteren Schaltschrank 16 für die zentrale Versorgung und Steuerung der Prozessmodule in Kauf nehmen zu müssen.

Insgesamt zeigt sich also, dass die erfindungsgemäße Prozessbank 10 durch die modulare Ausgestaltung auch jener Baugruppen, die nicht einem Prozessmodul zugeordnet sind, deutlich flexibler aufgebaut und erweitert werden kann. Insbesondere ist an dieser Stelle die Modularisierung des Basismoduls zu nennen, das nunmehr sehr variabel aus einer Trägereinrichtung und einzelnen, in sich geschlossenen autarken Funktionsmodulen aufgebaut werden kann, wobei die Funktionsmodule an beliebiger bzw. nahezu beliebiger Stelle innerhalb des Aufnahmebereichs der Trägereinrichtung einsetzbar sind. Diese Erhöhung der Flexibilität hat darüber hinaus Kostenvorteile, da die Standardisierung von Baugruppen weiter vorangetrieben werden kann und sich bedarfsgerechte, mit Prozessmodulen bestückte Prozessbänke realisieren lassen. Funktionsmodule werden nur dort platziert, wo sie benötigt werden.

## Patentansprüche

1. Bearbeitungsvorrichtung zur Bearbeitung, Montage oder Prüfung eines auf einem Werkstückträger transportierten Werkstücks mit einem Basismodul, das eine Trägereinrichtung (12) mit einem Aufnahmebereich (26) umfasst, und zumindest einem in das Basismodul an einer Stelle innerhalb des Aufnahmebereichs (26) einsetzbaren Prozessmodul (14), **dadurch gekennzeichnet, dass** die Trägereinrichtung aus einem Rückwandelement (44) und einem Bodenelement (42) ausgebaut ist, wobei das Rückwandelement senkrecht zum Bodenelement (42) steht, so dass sich im Querschnitt eine L-Form ergibt, eine Befestigungsschiene (48) auf einem Längsträger (46) des Rückwandelements (44) angebracht ist, und die Trägereinrichtung (12) ausgebildet ist, Prozessmodule (14) und Funktionsmodule (16) an beliebiger Stelle oder einer Vielzahl von vorbestimmten Stellen innerhalb des Aufnahmebereichs (26) auf der Befestigungsschiene aufzunehmen, wobei Teile zum Aufbau einer Einhausung (18, 20, 22, 24) als in den Aufnahmebereich (26) einsetzbare Funktionsmodule ausgebildet sind.

2. Bearbeitungsvorrichtung nach Anspruch 1, **dadurch gekennzeichnet, dass** die Anzahl der vorbestimmten Stellen größer ist als die maximale Zahl einsetzbarer Prozessmodule , vorzugsweise ein Vielfaches davon ist.

3. Bearbeitungsvorrichtung nach Anspruch 1 oder 2, **dadurch gekennzeichnet, dass** die Trägereinrichtung (12) aus zumindest einem Trägerelement mit einem hinteren Träger und einer unteren Auflagefläche ausgebildet ist.

4. Bearbeitungsvorrichtung nach Anspruch 3, **dadurch gekennzeichnet, dass** die Trägereinrichtung (12) einen Aufnahmebereich (26) bereitstellt, der sich über deren gesamte Länge erstreckt.

5. Bearbeitungsvorrichtung nach einem der vorhergehenden Ansprüche, **dadurch gekennzeichnet, dass** eine der Bearbeitungsvorrichtung oder einer bestimmten Anzahl von Prozessmodulen zugeordnete zentrale Steuereinrichtung (16) als in den Aufnahmebereich einsetzbares Funktionsmodul ausgebildet ist.

6. Bearbeitungsvorrichtung nach einem der vorhergehenden Ansprüche, **dadurch gekennzeichnet, dass** die zum Transport der Werkstückträger vorgesehene Fördereinrichtung als in den Aufnahmebereich einsetzbares Funktionsmodul ausgebildet ist.

7. Bearbeitungsvorrichtung nach Anspruch 3, **dadurch gekennzeichnet, dass** die Trägereinrichtung eine unabhängig von der Breite der einsetzbaren Prozessmodule gewählte Länge aufweist.

8. Bearbeitungsvorrichtung nach Anspruch 3, **dadurch gekennzeichnet, dass** Bfestigungsschiene (48) sich die über die gesamte Länge des Aufnahmebereichs erstreckt und die mit einem an einer Prozessplatte des Prozessmoduls angebrachten Haltelement oder einem an einem Funktionsmodul angebrachten Halteelement haltend und indexierend zusammenwirkt.

9. Bearbeitungsvorrichtung nach Anspruch 8, **dadurch gekennzeichnet, dass** die Befestigungsschiene im Querschnitt im wesentlichen T-förmig oder mit T-förmiger Nut versehen ausgebildet ist und eine beliebige Anbringung eines Prozessmoduls oder Funktionsmoduls erlaubt, oder
dass die Befestigungsschiene ein Lochraster zur Aufnahme von Indexier- und Befestigungsbolzen aufweist.

10. Bearbeitungsvorrichtung nach Anspruch 9, **dadurch gekennzeichnet, dass** das Lochraster-Maß ein ganzzahliger Teiler der Prozessmodul-Rasterbreite ist.

11. Bearbeitungsvorrichtung nach einem der Ansprüche 3 bis 10, **dadurch gekennzeichnet, dass** die Auflagefläche der Trägereinrichtung zumindest eine, sich über die Länge des Aufnahmebereichs erstreckende Lochraster-Schiene aufweist, wobei das Lochraster jenem der Befestigungsschiene entspricht.

12. Prozessmodul für eine Bearbeitungsvorrichtung nach einem der Ansprüche 1 bis 11, mit einer Prozessplatte und einem Schaltschrankgehäuse, **dadurch gekennzeichnet, dass** an der Prozessplatte zumindest ein Halteelement vorgesehen ist, das an die Befestigungsschiene des Rückwandelementes (44) der Trägereinrichtung angepasst ist, um mit dieser haltend und indexierend Zusammenzuwirken.

13. Prozessmodul nach Anspruch 123, **dadurch gekennzeichnet, dass** das Halteelement als Bohrbuchse in der Prozessplatte ausgebildet ist, in die ein an der Befestigungsschiene angebrachter Indexierbolzen eingreifen kann.

14. Prozessmodul nach Anspruch 12 oder 13, **dadurch gekennzeichnet, dass** an der Unterseite der Prozessplatte des Prozessmoduls Befestigungselemente vorgesehen sind, die mit der Auflagefläche der Trägereinrichtung zusammenwirken.

## Claims

1. A processing apparatus for processing, assembling or testing a workpiece transported on a work carrier, having a base module, which comprises the carrier device (12) with an accommodating region (26), and at least one process module (14) which can be inserted into the base module at a point within the accommodating region (26), **characterized in that** the carrier device (12) is composed of a rear wall element (44) and a base element (42), wherein the rear wall element is disposed perpendicularly to the base (42), thereby resulting in an L shape in cross section,
a fastening rail (48) is attached to a longitudinal member (46) of the rear wall element (44), and
the carrier device (12) is designed to accommodate process modules (14) and functional modules (16) at any desired point or at a multiplicity of predetermined points within the accommodating region (26) on the fastening rail, wherein parts for constructing a housing (18, 20, 22, 24) are designed as functional modules which can be inserted into the accommodating region (26).

2. The processing apparatus as claimed in claim 1, **characterized in that** the number of predetermined points is greater than the maximum number of process modules that can be inserted, preferably a multiple thereof.

3. The processing apparatus as claimed in claim 1 or 2, **characterized in that** the carrier device (12) is formed from at least one carrier element with a rear carrier and a bottom bearing surface.

4. The processing apparatus as claimed in claim 3, **characterized in that** the carrier device (12) provides an accommodating region (26), which extends over its entire length.

5. The processing apparatus as claimed in one of the preceding claims, **characterized in that** a central control device (16) assigned to the processing apparatus or to a specific number of process modules is designed as a functional module, which can be inserted into the accommodating region.

6. The processing apparatus as claimed in one of the preceding claims, **characterized in that** the conveying device provided for transporting the work carriers is designed as a functional module, which can be inserted into the accommodating region.

7. The processing apparatus as claimed in claim 3, **characterized in that** the carrier device has a length selected independently of the width of the process modules that can be inserted.

8. The processing apparatus as claimed in claim 3, **characterized in that** the fastening rail (48) extends over the entire length of the accommodating region and interacts in a retaining and indexing manner with a retaining element attached to a process plate of the process module or with a retaining element attached to a functional module.

9. The processing apparatus as claimed in claim 8, **characterized in that** the fastening rail is designed so as to be essentially T-shaped in cross section or so as to be provided with a T-shaped slot in cross section and enables a process module or functional module to be placed in any desired manner, or
the fastening rail has a hole matrix for accommodating indexing and fastening pins.

10. The processing apparatus as claimed in claim 9, **characterized in that** the hole matrix size is an integral divisor of the process module matrix width.

11. The processing apparatus as claimed in one of claims 3 to 10, **characterized in that** the bearing surface of the carrier device has at least one hole matrix rail extending over the length of the accommodating region, the hole matrix corresponding to that of the fastening rail.

12. A process module for a processing apparatus as claimed in one of claims 1 to 11, having a process plate and a switchgear cabinet, **characterized in that** at least one retaining element is provided on the process plate, said retaining element being adapted to the fastening rail of the rear wall element (44) of the carrier device in order to interact with said fastening rail in a retaining and indexing manner.

13. The process module as claimed in claim 12, **characterized in that** the retaining element is designed as a drill bush in the process plate, in which drill bush an indexing pin attached to the fastening rail can engage.

14. The process module as claimed in claim 12 or 13, **characterized in that** fastening elements, which interact with the bearing surface of the carrier device are provided on the underside of the process plate of the process module.

## Revendications

1. Dispositif d'usinage pour l'usinage, le montage ou le contrôle d'une pièce transportée sur un porte-pièce avec un module de base, qui comprend un dispositif porteur (12) avec une zone de réception (26), et avec au moins un module de traitement (14) insérable dans le module de base à un emplacement situé à l'intérieur de la zone de réception (26), **caractérisé en ce que** le dispositif porteur est composé d'un élément de paroi arrière (44) et d'un élément de fond (42), dans lequel l'élément de paroi arrière est dressé perpendiculairement à l'élément de fond (42), de telle manière qu'il en résulte une section transversale en forme de L, un rail de fixation (48) est installé sur un longeron (46) de l'élément de paroi arrière (44), et le dispositif porteur (12) est configuré pour recevoir des modules de traitement (14) et des modules fonctionnels (16) à un emplacement quelconque ou à une pluralité d'emplacements prédéterminés à l'intérieur de la zone de réception (26) sur le rail de fixation, dans lequel des parties destinées à la construction d'une enceinte (18, 20, 22, 24) sont réalisées sous la forme de modules fonctionnels insérables dans la zone de réception (26).

2. Dispositif d'usinage selon la revendication 1, **caractérisé en ce que** le nombre des emplacements prédéterminés est plus grand que le nombre maximal de modules de traitement insérables, il en est de préférence un multiple.

3. Dispositif d'usinage selon la revendication 1 ou 2, **caractérisé en ce que** le dispositif porteur (12) est composé d'au moins un élément porteur avec un support arrière et une surface de dépôt inférieure.

4. Dispositif d'usinage selon la revendication 3, **caractérisé en ce que** le dispositif porteur (12) procure une zone de réception (26), qui s'étend sur toute la longueur de celui-ci.

5. Dispositif d'usinage selon l'une quelconque des revendications précédentes, **caractérisé en ce qu'**un dispositif de commande central (16) associé au dispositif d'usinage ou à un nombre déterminé de modules de traitement est réalisé sous la forme d'un module fonctionnel insérable dans la zone de réception.

6. Dispositif d'usinage selon l'une quelconque des revendications précédentes, **caractérisé en ce que** le dispositif de transport prévu pour le transport des porte-pièces est réalisé sous la forme d'un module fonctionnel insérable dans la zone de réception.

7. Dispositif d'usinage selon la revendication 3, **caractérisé en ce que** le dispositif porteur présente une longueur choisie indépendamment de la largeur des modules de traitement insérables.

8. Dispositif d'usinage selon la revendication 3, **caractérisé en ce que** le rail de fixation (48) s'étend sur toute la longueur de la zone de réception et coopère, en le maintenant et en l'indexant, avec un élément de maintien installé sur une plaque de traitement du module de traitement ou avec un élément de maintien installé sur un module fonctionnel.

9. Dispositif d'usinage selon la revendication 8, **caractérisé en ce que** le rail de fixation est en section transversale essentiellement en forme de T ou est pourvu d'une rainure en forme de T et permet un placement arbitraire d'un module de traitement ou d'un module fonctionnel, ou **en ce que** le rail de fixation présente une grille de trous destinés à recevoir des boulons d'indexage et de fixation.

10. Dispositif d'usinage selon la revendication 9, **caractérisé en ce que** la dimension de la grille de trous est un diviseur entier de la largeur de grille du module de traitement.

11. Dispositif d'usinage selon l'une quelconque des revendications 3 à 10, **caractérisé en ce que** la surface de dépôt du dispositif porteur présente au moins un rail de grille de trous s'étendant sur la longueur de la zone de réception, dans lequel la grille de trous correspond à celle du rail de fixation.

12. Module de traitement pour un dispositif d'usinage selon l'une quelconque des revendications 1 à 11, avec une plaque de traitement et une armoire de distribution, **caractérisé en ce qu'**il est prévu sur la plaque de traitement au moins un élément de maintien, qui est adapté au rail de fixation de l'élément de paroi arrière (44) du dispositif porteur, afin de coopérer avec celui-ci en assurant le maintien et l'indexage.

13. Module de traitement selon la revendication 12, **caractérisé en ce que** l'élément de maintien est réalisé sous la forme d'un guide de perçage dans la plaque de traitement, dans lequel un boulon d'indexage placé sur le rail de fixation peut s'engager.

14. Module de traitement selon la revendication 12 ou 13, **caractérisé en ce qu'**il est prévu sur le côté inférieur de la plaque de traitement du module de traitement des éléments de fixation, qui coopèrent avec la surface de dépôt du dispositif porteur.
